# EUROPEAN PATENT APPLICATION

(11) **EP 3 208 990 A1**
(43) Date of publication of application: **23.08.2017**
(21) Application number: 16155797.0
(22) Date of filing: 16.02.2016
(51) Int. Cl.: H04L 29/06, H04W 64/00

(54) **CELLULAR NETWORK BASE STATION**

(71) Applicant: EXFO Oy, 90590 Oulu (FI)
(72) Inventor: Kemppainen, Jukka, 90590 Oulu (FI)
(74) Representative: Kolster Oy Ab

(57) **Abstract**

A cellular network base station (100), especially for IMSI catching. The base station (100) includes radio transceiver(s) (102) capable of implementing a radio connection (140) to a user equipment (120), an integrated radio resource management function (104) to a radio interface of the radio transceiver(s) (102), and a proprietary interface (106) communicatively couplable (142) with an external remote control apparatus (130). The base station (100) is configured to receive, with the proprietary interface (106), radio interface parameters from the external remote control apparatus (130), and control, with the integrated radio resource management function (104), the radio interface of the transceiver(s) (102) having an ongoing radio connection (140) with a connected user equipment (120) based on the received radio interface parameters.

## Description

### Field

The invention relates to a cellular network base station.

### Background

A cellular network base station may be a part of an arrangement for IMSI (International Mobile Subscriber Identity) catching, with which user equipment traffic may be intercepted in order to identify the user equipment, and possibly perform other surveillance such as tracking its movement.

However, an integrated radio resource management function of the cellular network base station makes it difficult or impossible to control the cellular network base station to implement the IMSI catching.

### Brief description

The present invention seeks to provide an improved cellular network base station.

According to an aspect of the present invention, there is provided a cellular network base station as specified in claim 1.

### List of drawings

Example embodiments of the present invention are described below, by way of example only, with reference to the accompanying drawings, in which
Figure 1 illustrates example embodiments of a cellular network base station;
Figures 2, 3 and 4 illustrate example embodiments of protocol stacks and data structures; and
Figure 5 is a signal sequence chart illustrating example embodiments of communication.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

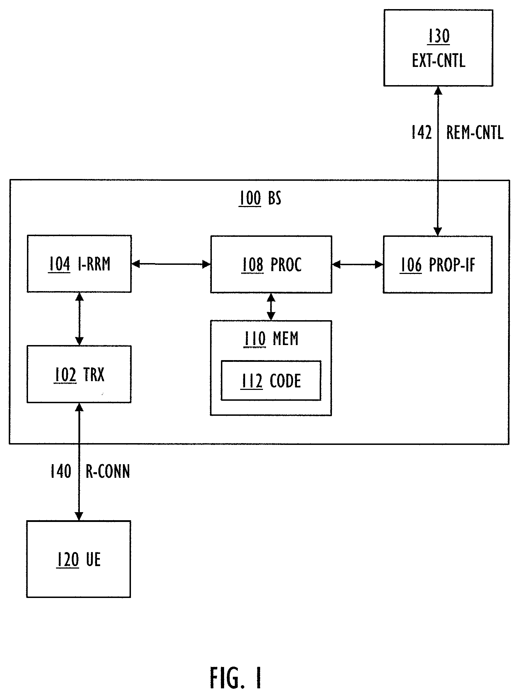

Figure 1 illustrates example embodiments of a cellular network base station 100. The cellular network base station 100 may be called with other names as well (such as enhanced or evolved NodeB eNB), but in essence it belongs to the network infrastructure of a cellular network and implements a radio communication interface 140 with a user equipment 120.

The base station 100 comprises one or more radio transceivers 102 capable of implementing a radio connection 140 to a user equipment 120.

The user equipment (UE) 120 refers to any device used by an end-user to communicate through the cellular network base station 100. A non-exhaustive list of the types of the user equipment 120 includes: a mobile terminal, a portable electronic communication apparatus, a mobile phone, a smartphone, a tablet computer, a phablet, a smartwatch, a general-purpose mobile computing device.

The base station 100 also comprises an integrated radio resource management function 104 to a radio interface of the one or more radio transceivers 102.

In an example embodiment, the integrated radio resource management function 104 is implemented with a software-defined radio (SDR) technology. With SDR technology, the one or more radio transceivers 102 contain the required radio frequency parts (for example: an antenna, a low-noise amplifier, band-pass filters, an analog-to-digital converter), but at least some of the traditional hardware components, especially those used for digital signal processing, are implemented with software running on a processor.

The base station 100 also comprises a proprietary interface 106 communicatively couplable 142 with an external remote control apparatus 130.

In an example embodiment, the cellular network base station 100 and the external remote control apparatus 130 implement an IMSI-catcher.

The base station 100 also comprises one or more processors 108 and one or more memories 110 including computer program code 112.

In an example embodiment, the one or more processors 108 and the computer program code 112 may also implement the integrated radio resource management function 104.

The term 'processor' 108 refers to a device that is capable of processing data. Depending on the processing power needed, the cellular network base station 100 may comprise several processors 108 such as parallel processors or multicore processor(s). When designing the implementation of the processor 108, a person skilled in the art will consider the requirements set for the size and power consumption of the cellular network base station 100, the necessary processing capacity, production costs, and production volumes, for example.

The term 'memory' 110 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The processor 108 and the memory 110 may be implemented by an electronic circuitry. A non-exhaustive list of implementation techniques for the processor 108 and the memory 110 includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

In an example embodiment, the processor 108 may be implemented as a microprocessor implementing functions of a central processing unit (CPU) on an integrated circuit. The CPU is a logic machine executing the computer program code 112. The computer program code 112 may be coded as a computer program using a programming language, which may be a high-level programming language, such as C, C++, or Java, or a low-level programming language, such as a machine language, or an assembler, for example. The CPU may comprise a set of registers, an arithmetic logic unit (ALU), and a control unit (CU). The control unit is controlled by a sequence of the computer program code 112 transferred to the CPU from the (working) memory 110. The control unit may contain a number of microinstructions for basic operations. The implementation of the microinstructions may vary, depending on the CPU design. The microprocessor 108 may also have an operating system (a dedicated operating system of an embedded system, a real-time operating system, or even a general-purpose operating system), which may provide the computer program code 112 with system services.

An example embodiment provides a computer-readable medium comprising a computer program comprising the computer program code 112 which, when loaded into the cellular network base station 100 causes the cellular network base station 100 to perform the described example embodiments. The example embodiments of the cellular network base station 100 may be used to enhance the operation of the computer program code 112. There are many ways to structure the computer program code 112. In an example embodiment, the operations of the computer program code 112 may be divided into functional modules, sub-routines, methods, classes, objects, applets, macros, etc., depending on the software design methodology and the programming language used. In modern programming environments, there are software libraries, i.e. compilations of ready-made functions, which may be utilized by the computer program code 112 for performing a wide variety of standard operations. In an example embodiment, the computer program code 112 may be in source code form, object code form, executable file, or in some intermediate form. The computer-readable medium may comprise at least the following: any entity or device capable of carrying computer program code 112 to the cellular network base station 100, a record medium, a computer memory, a read-only memory, an electrical carrier signal, a telecommunications signal, and a software distribution medium. In some jurisdictions, depending on the legislation and the patent practice, the computer-readable medium may not be the telecommunications signal. In an example embodiment, the computer-readable medium may be a non-transitory computer-readable storage medium.

The one or more memories 110 and the computer program code 112 are configured to, with the one or more processors 108, cause the cellular network base station 100 at least to receive, with the proprietary interface 106, radio interface parameters from the external remote control apparatus 130, and control, with the integrated radio resource management function 104, the radio interface of the one or more transceivers 102 having an ongoing radio connection 140 with a connected user equipment 120 based on the received radio interface parameters.

In an example embodiment, the radio interface parameters comprise radio resource control parameters of the ongoing radio connection 140.

In an example embodiment, the cellular network base station 100 is further caused to obtain, from the integrated radio resource management function 104, radio parameters relating to the ongoing radio connection 140, and to transmit, with the proprietary interface 106, the obtained radio parameters to the external remote control apparatus 130.

In an example embodiment, the radio parameters comprise radio resource control parameters of the ongoing radio connection 140 and radio measurement parameters of the ongoing radio connection 140.

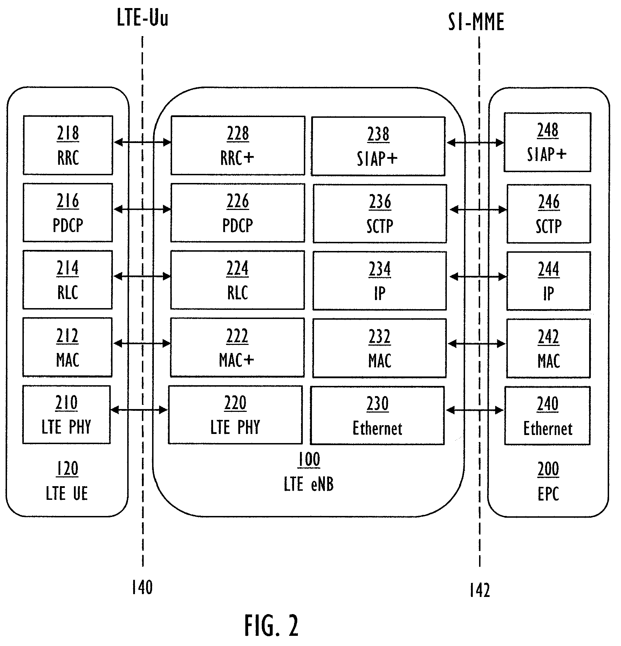

In an example embodiment illustrated in Figure 2, the proprietary interface 106 comprises an S1-MME interface 142 with S1-AP protocol messages carrying remote control extensions. In an example embodiment, S1-MME interface 142 is between an LTE eNodeB 100 and Evolved Packet Core (EPC, or System Architecture Evolution SAE Core) 200. In an example embodiment, EPC 200 comprises the following subcomponents: MME (Mobility Management Entity), SGW (Serving Gateway), PGW (PDN Gateway), HSS (Home Subscriber Server), ANDSF (Access Network Discovery and Selection Function), and ePDG (Evolved Packet Data Gateway). In the example embodiment, wherein the cellular network base station 100 and the external remote control apparatus 130 implement the IMSI-catcher, the EPC 200 may include only a subset of the functionality and the subcomponents, implemented so that the IMSI catching and possibly also other required surveillance operation may be performed.

In an example embodiment, the external remote control apparatus 130 implements a required subset of the EPC 200 functionality, and all LTE radio-related procedures are implemented inside the eNodeB 100.

Figure 2 also illustrates another example embodiment, wherein the radio interface parameters are stored to an extended dynamic data structure comprising non-standard fields for Radio Resource Control RRC 218, 228, Medium Access Control MAC 212, 222 and S1 Application Part S1AP 238, 248 protocols. In Figure 2, the protocols that are made proprietary with the use of non-standard fields are marked with "+"-sign: MAC+ 222, RRC+ 228 and S1AP+ 238 of the cellular network base station 100 and S1AP+ 248 of the EPC 200. In an example embodiment, MAC+ 222, RRC+ 228 and S1AP+ 238 are enhanced protocol implementations supporting radio operations before integrity protection is switched on. However, the MAC+ 222 and RRC+ 228 protocols are also standard compliant to facilitate communication with the standard user equipment 120.

In Figure 2, an example embodiment of layered protocol stacks for the user equipment 120, cellular network base station 100 and the EPC 200 (or the external remote control apparatus 130) are illustrated.

The radio interface 140 is implemented, with the following protocol stacks in the user equipment 120 and the cellular network base station 100: LTE physical layer 210, 220, MAC layer 212, 222, Radio Link Control RLC layer 214, 224, Packet Data Convergence Protocol PDCP layer 216, 226, and RRC layer 218, 228.

The proprietary interface 142 comprises the S1-MME interface implemented with the following protocol stacks in the user equipment 120 and the EPC 200 (or the external remote control apparatus 130): Ethernet layer 230, 240, MAC layer 232, 242, Internet Protocol IP layer 234, 244, Stream Control Transmission Protocol SCTP layer 236, 246, and S1AP layer 238, 248.

In an example embodiment, the extended dynamic data structure is a user equipment-specific dynamic data structure that is internal to the cellular network base station 100 and valid for the duration of the ongoing radio connection 140.

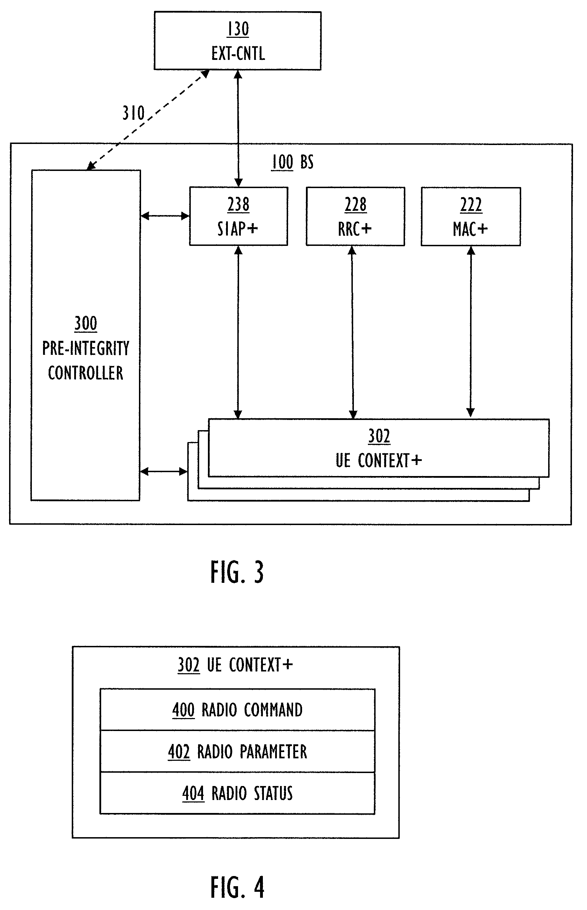

In an example embodiment illustrated in Figure 3, the extended dynamic data structure comprises an extended user equipment context 302.

In an example embodiment illustrated in Figure 4, the extended dynamic data structure 302 comprises a user equipment-specific radio command 400, parameter(s) 402 of the command, and a radio status 404.

In an example embodiment the extended dynamic data structure comprises an S1 Application Part S1AP 238 context.

Figure 3 also illustrates an example embodiment, wherein the radio interface of the one or more transceivers 102 having the ongoing radio connection 140 with the connected user equipment 120 is controlled before an integrity protection between the user equipment 120 and the cellular radio network base station 100 is switched on. In an example embodiment, the cellular network base station 100 comprises a pre-integrity controller 300 for implementing the required controlling (for IMSI catching etc.). In an example embodiment, the external remote control apparatus 130 communicates with the pre-integrity controller 300 via S1AP+ 238. The pre-integrity controller 300 stores a remote radio command to the UE context+ 302. RRC+ 228 and MAC+ 222 update the radio status of the UE context+ 302.

In an example embodiment, the external remote control apparatus 130 performs identity catching, dropping and direction finding before integrity protection (between LTE UE 120 and eNodeB 100) is activated.

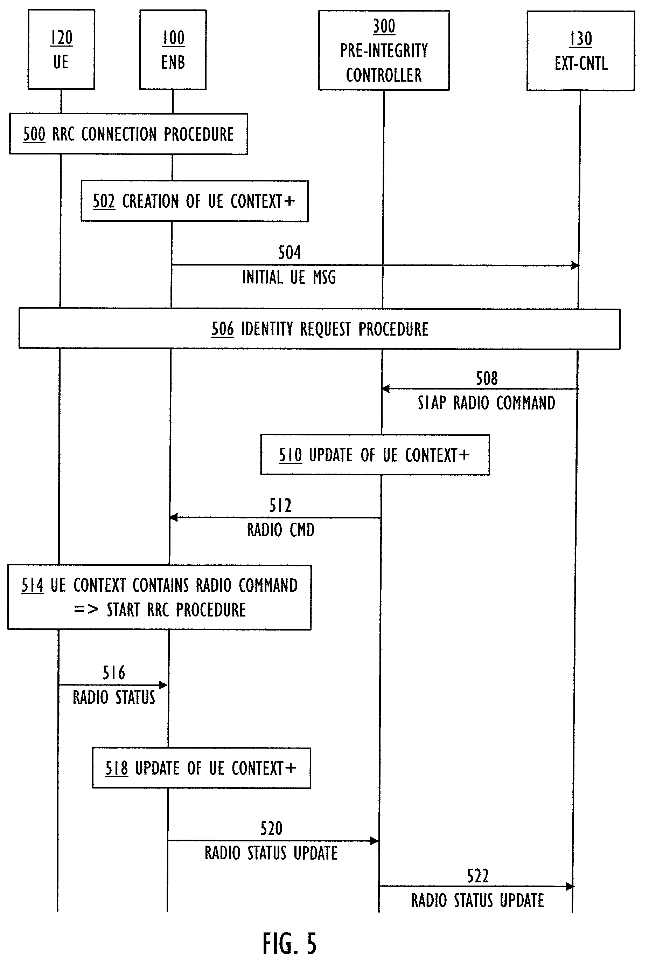

Figure 5 is a signal sequence chart illustrating example embodiments of communication.

In 500, a RRC connection procedure is performed between the user equipment 120 and cellular network base station 100, whereupon UE context+ is created in 502 by the cellular network base station 100.

An initial UE message 504 is transmitted from the cellular network base station to the external remote control apparatus 130, whereupon an identity request procedure is initialized in 506. The external remote control apparatus 130 transmits an S1AP radio command 508 to the pre-integrity controller 300, whereupon UE context+ is updated in 510, and a radio command 512 is given from the pre-integrity controller 300 to the cellular network base station 100.

As UE context+ now contains a radio command, an RRC procedure is started in 514 between the user equipment 120 and the cellular network base station 100. A radio status 516 is transmitted from the user equipment 120 to the cellular network base station 100, whereupon UE context+ is again updated in 518. A radio status update 520, 522 is transmitted to the external remote control apparatus 130.

In an example embodiment, the proprietary interface 106 is configured to be communicatively couplable with the external remote control apparatus 130 so that at least one of the following is used: an interface 142 between the cellular network base station 100 and a mobile management entity 130 is utilized for the communication, an interface 142 between the cellular network base station and a subset of a mobile management entity 130 is utilized for the communication, an inter-process communication mechanism is utilized for the communication. In an example embodiment, the interface relates to S1 interface, but it can also be implemented with other inter-process communication mechanisms such as file-based communication or non-S1 transport (UDP/TCP sockets, for example) 310.

In an example embodiment, the radio interface of the one or more transceivers 102 having the ongoing radio connection 140 with the connected user equipment 120 is controlled so that the user equipment 120 is dropped from an LTE cell to a UMTS cell or to a GSM cell.

In an example embodiment, LTE drop-to-UMTS / drop-to-GSM is performed as a following sequence:
1) The eNodeB 100 connects to the external remote control apparatus 130 using the S1 interface 142.
2) The external remote control apparatus 130 activates LTE fake cell creation by the cellular network base station 100 using the S1 interface 142.
3) The UE 120 makes a cell reselection to LTE fake cell.
4) The external remote control apparatus 130 collects identity information from the LTE UE 120 using the S1 interface 142.
5) Based on the received UE identity information, the external remote control apparatus 130 sends Drop-to-UMTS (or Drop-GSM) command to the eNodeB 100 using the S1 interface 142: the external remote control apparatus 130 encodes the command as NAS PDU of S1AP Downlink NAS Transport message and sends the message to the eNodeB 100. The command contains redirection information for one UMTS fake cell (or one GSM fake cell) connected to the same the external remote control apparatus 130 (or to a system comprising a plurality of external remote control apparatuses 130). The NAS message is UE 120 specific; no UE parameter is needed.
6) S1AP Downlink NAS Transport receiver function of the eNodeB 100 detects Drop-to-UMTS (Drop-to-GSM) command PDU using length and signature information. The eNodeB 100 stores the Redirection Information from the command to the active UE context+ data structure 302.
7) The eNB 100 sends RRC Meas Configuration with UMTS (or GSM) measurement request and waits until receives RRC Measurement Report from the LTE UE 120. This step is optional.
8) The external remote control apparatus 130 sends NAS Attach Reject or NAS Service Reject to LTE UE 120.
9) The eNodeB 100 sends RRC Connection Release with rrcRedirectionCarrierInformation (stored to the UE context+ 302 in the step 6) message to LTE UE 120.
10) The LTE UE 120 makes a cell redirection to the UMTS (or GSM) fake cell received in the rrcRedirectionCarrierInformation of step 8. Typically, redirection takes about three seconds.

With this described sequence, the cellular network base station 100 and the external remote control apparatus 130 may drop the LTE UE 120 to the UMTS fake cell (or to the GSM fake cell) as rapidly as possible and make the drop as reliable as possible.

A prior art solution uses NAS Attach Reject, NAS Tracking Area Update Reject, and NAS Service Reject procedures for dropping LTE UE to UMTS or GSM, but the dropping procedure takes a long time (30 to 60 seconds) before the LTE UE tries to camp to the UMTS fake cell or GSM fake cell, or sometimes the dropping even fails.

In prior art, an O&M (Operations and Maintenance) interface of the eNodeB contains redirectionCarrierInfo. The redirectionCarrierInfo of the O&M is quite static information. The eNodeB uses it when redirection to UMTS or to GSM is requested via the S1 interface when integrity protection is active. But, the standard S1 interface does not define any redirection procedures which could be used before integrity protection is active. Prior art products use the SDR eNodeB with a 3GPP standard S1 interface. Typically, SDR eNodeB has also the O&M interface which could be tailored for redirection information but the O&M interface has not been designed for situations when the UE specific, rapidly changing redirection information is mandatory. This is a known limitation of the LTE architecture. The present example embodiments explain a method which provides the eNodeB UE specific redirectionCarrierInfo parameter on-the-fly, based on the changing RF situation detected by the external remote control apparatus. The example embodiment teaches a novel eNodeB-external remote control apparatus communication method which is reliable because it uses the UE specific "data pipe" and UE specific context already active for the UE. The example embodiment is significantly faster and more reliable compared to the "drop" done via the standard S1 interface.

In an example embodiment, the radio interface of the one or more transceivers 102 having the ongoing radio connection 140 with the connected user equipment 120 is controlled so that direction finding of the user equipment 120 is performed. This example embodiment enables direction finding of the LTE UE 120 using the eNodeB 100 and the external remote control apparatus 130. During direction finding, the external remote control apparatus 130 sends control commands to the eNodeB 100 and receives RRC measurement reports from the UE 120 and distance estimates from the eNodeB 100. This kind of direction finding is not possible with the standard S1 interface.

In an example embodiment, LTE direction finding is performed as a following sequence:
1) The eNodeB 100 connects to the external remote control apparatus 130 using the S1 interface 142.
2) The external remote control apparatus 130 activates an LTE fake cell creation by the cellular network base station 100 using the S1 interface 142.
3) The UE 120 makes a cell reselection to the LTE fake cell.
4) The external remote control apparatus 130 collects UE identity information from the LTE UE 120 using the S1 interface 142.
5) Based on the received UE identity information, the external remote control apparatus 130 sends Directing Finding command to the eNodeB 100 using the S1 interface 142: the external remote control apparatus 130 encodes the command as NAS PDU of S1AP Downlink NAS Transport message and sends the message to the eNodeB 100. The NAS message is UE 120 specific; no UE parameter is needed.
6) S1AP Downlink NAS Transport receiver function of the eNodeB 100 detects Direction Finding command PDU using length and signature information. The eNodeB 100 stores the Directing Finding command to the active UE context+ 302 of the UE 120.
7) The eNodeB 100 sends RRC Connection Reconfiguration with measurement request to LTE UE 120.
8) The eNodeB 100 activates distance estimate calculation of the LTE PHY and LTE MAC layers. Distance estimate is based on timing advance values.
9) The eNodeB 100 receives RRC Measurement Report sent by LTE UE 120, collects the current distance estimate from PHY&MAC, stores this information to the UE Context+ 302, and sends radio status update 520 to the external remote control apparatus 130 inside S1AP NAS Uplink Transport.
10) The LTE UE 120 keeps sending RRC Measurement Reports to the eNodeB 100 for about 15 seconds.
11) The LTE UE 120 disconnects from the LTE fake cell.
12) After 10 seconds, the LTE UE 120 comes back to the same fake cell.
13) The steps 3 to 12 may be repeated multiple times as required.

It will be obvious to a person skilled in the art that, as technology advances, the inventive concept can be implemented in various ways. The invention and its embodiments are not limited to the example embodiments described above but may vary within the scope of the claims. At least some of the example embodiments have been described for LTE (Long-Term Evolution) standard, but the example embodiments may be applied to a cellular network base station having an integrated radio resource management function of radio transceivers applying another standard as well. If required, more information on the LTE and its protocols may be obtained from the relevant specifications such as specifications published by the 3GPP.

## Claims

1. A cellular network base station comprising:
one or more radio transceivers capable of implementing a radio connection to a user equipment;
an integrated radio resource management function to a radio interface of the one or more radio transceivers;
a proprietary interface communicatively couplable with an external remote control apparatus;
one or more processors; and
one or more memories including computer program code,
the one or more memories and the computer program code configured to, with the one or more processors, cause the cellular network base station at least to:
receive, with the proprietary interface, radio interface parameters from the external remote control apparatus; and
control, with the integrated radio resource management function, the radio interface of the one or more transceivers having an ongoing radio connection with a connected user equipment based on the received radio interface parameters.

2. The cellular network base station of claim 1, wherein the radio interface parameters comprise radio resource control parameters of the ongoing radio connection.

3. The cellular network base station of claim 1, wherein the cellular network base station is further caused to:
obtain, from the integrated radio resource management function, radio parameters relating to the ongoing radio connection;
transmit, with the proprietary interface, the obtained radio parameters to the external remote control apparatus.

4. The cellular network base station of claim 3, wherein the radio parameters comprise radio resource control parameters of the ongoing radio connection and radio measurement parameters of the ongoing radio connection.

5. The cellular network base station of any preceding claim, wherein the proprietary interface comprises an S1-MME interface with S1-AP protocol messages carrying remote control extensions.

6. The cellular network base station of any preceding claim, wherein the radio interface parameters are stored to an extended dynamic data structure comprising non-standard fields for Radio Resource Control, Medium Access Control and S1 Application Part protocols.

7. The cellular network base station of claim 6, wherein the extended dynamic data structure is a user equipment-specific dynamic data structure that is internal to the cellular network base station and valid for the duration of the ongoing radio connection.

8. The cellular network base station of claim 6 or 7, wherein the extended dynamic data structure comprises an extended user equipment context.

9. The cellular network base station of claim 6, 7 or 8, wherein the extended dynamic data structure comprises a user equipment-specific radio command, parameters of the command, and a radio status.

10. The cellular network base station of claim 6, 7, 8 or 9, wherein the extended dynamic data structure comprises an S1 Application Part context.

11. The cellular network base station of any preceding claim, wherein the radio interface of the one or more transceivers having the ongoing radio connection with the connected user equipment is controlled before an integrity protection between the user equipment and the cellular radio network base station is switched on.

12. The cellular network base station of any preceding claim, wherein the proprietary interface is configured to be communicatively couplable with an external remote control apparatus so that at least one of the following is used: an interface between the cellular network base station and a mobile management entity is utilized for the communication, an interface between the cellular network base station and a subset of a mobile management entity is utilized for the communication, an inter-process communication mechanism is utilized for the communication.

13. The cellular network base station of any preceding claim, wherein the radio interface of the one or more transceivers having the ongoing radio connection with the connected user equipment is controlled so that the user equipment is dropped from an LTE cell to a UMTS cell or to a GSM cell.

14. The cellular network base station of any preceding claim, wherein the radio interface of the one or more transceivers having the ongoing radio connection with the connected user equipment is controlled so that direction finding of the user equipment is performed.

15. The cellular network base station of any preceding claim, wherein the integrated radio resource management function is implemented with a software-defined radio technology.

16. The cellular network base station of any preceding claim, wherein the cellular network base station and the external remote control apparatus implement an IMSI-catcher.
